# EUROPEAN PATENT APPLICATION

(11) **EP 2 001 213 A2**
(43) Date of publication of application: **10.12.2008**
(21) Application number: 07739772.7
(22) Date of filing: 27.03.2007
(51) Int. Cl.: H04M 3/56, H04L 12/66

(54) **COMMUNICATION SYSTEM**

(30) Priority: 29.03.2006 JP 2006092297
(71) Applicant: NEC Corporation, Minato-ku Tokyo 108-8001 (JP)
(72) Inventor: TAMURA, Toshiyuki, Minato-ku, Tokyo 108-8001 (JP)
(74) Representative: Betten & Resch
(86) International application number: PCT/JP2007/056334
(87) International publication number: WO 2007/116722

(57) **Abstract**

The present invention addresses the difference in the basic concept of the communication means between a PoC system, which is a half-duplex communication system, and a general telephony, which is a full-duplex communication system, providing smooth communications. A communication system is provided with a communication controller which performs interconversion between communication control signal used in a telephone network and a communication control signal used on a PoC (Push-To-Talk over Cellular) system and a voice signal processor performing interconversion between a full-duplex voice signal used in the telephone network and a half-duplex voice signal used in the PoC system.

## Description

### Technical Field

The present invention relates to a communication system for providing half-duplex communications by interconnecting a half-duplex communication system (referred to as PoC system, hereinafter) adapted to broadcasting and provided within a cell phone network, a telephone station connected to a full-duplex communication system such as general telephone networks and company extension telephone networks, and a terminal device dedicated to the PoC system.

### Background Art

When it comes to a stage where a PoC (Push-To-Talk over Cellular) system is generally available, there will be a need for communications from telephones connected to a conventional general telephone network or a company extension telephone networks, to PoC subscribers.

In meeting this need, however, an issue is to provide smooth communications through addressing the difference in the basic concept of communication means between the PoC system, which is a half-duplex communication system, and the general telephone system, which is a full-duplex communication system, the difference including the right-to-speak control among callers as characterized by half-duplex communications, characteristics of half-duplex communications, the method to deal with voice data allowed to be broadcasted, and also the method to dial a PoC group from general telephones. Specifically, there are problems as follows.

A first problem is that there is no method to indicate the right to speak among callers who use full-duplex communications, in providing smooth communications between the half-duplex communication system and the full-duplex communication system. This arises from the fact that the full-duplex communication basically lacks a concept of controlling the right to speak, which is required in the half-duplex communication system.

A second problem is that there is a difference in the call control method between a PoC system and a full-duplex communication system, such as general telephone networks and company extension telephone networks when a connection is established therebetween. This arises from the fact the PoC system, which is a half-duplex communication system that is allowed to broadcast, does not have a ringing process to be carried out in the general telephone system.

A third problem is that there is no method to specify a PoC group, when the PoC group is called from a full-duplex communication system, such as general telephone networks and company extension telephone networks. This arises from the fact that the general telephone network basically lacks a concept of specifying a group by a telephone number.

As a related technique, Japanese Laid-Open Patent Application No. 2001-007833 discloses an interface converter.

This conventional technique relates to an interface converter provided for a network link which uses a full-duplex link based on 100BASE-TX. This interface converter is characterized by including: first switch means which converts a full-duplex interface into a half-duplex interface; a hub connected to the first switch means and operating as a half-duplex link; and second switch means connected to the hub to convert a half-duplex interface into a full-duplex interface.

Japanese Laid-Open Patent Application No. 2005-508113 discloses a wireless voice dispatch system.

This wireless voice dispatch system includes at least one base station (BTS), at least one talking mobile station (MS), and at least one listening MS, where each pair of forward and reverse links is allowed to be established between each MS and said BTS with at least one link upon at least one pair being substantially idled, the identity of the link in the pair depending on whether the associated MS is the talking MS or the listening MS.

Furthermore, Japanese Laid-Open Patent Application Nos. S56-149147 and S57-143956 disclose intercommunication methods between a half-duplex communication system and a full-duplex communication system. However, these documents do not describe anything about the application to the PoC system.

### Disclosure of Invention

An object of the present invention is to address the difference in the basic concept of communication means between a PoC system, which is a half-duplex communication system, and a general telephone system, which is a full-duplex communication system, and to thereby provide smooth communications therebetween.

The communication system of the present invention includes: a communication controller which provides interconversion between a communication control signal used in a telephone network and a communication control signal used in a PoC system; and a voice signal processor which provides interconversion between a full-duplex voice signal used in the telephone network and a half-duplex voice signal used in the PoC system.

In one exemplary embodiment, when starting communications, the communication controller performs ringing in the telephone network to seek a response from a responding side, while immediately transmitting a voice signal to a PoC group member in the PoC system.

The communication controller and the voice signal processor are cooperatively operated to provide connections between full-duplex communications and half-duplex communications.

When a speech is issued from a telephone connected to the telephone network after the start of the communications, the voice signal processor preferably makes a control for preventing duplicate speech issuances within the PoC group, by detecting the speech from the telephone by using the signal level of the voice signal and sending a signal for controlling the right-to-speak from the voice signal processor to the communication controller upon the detection of the speech.

The telephone may belong to a telephone network of a full-duplex communication, and may be connected to the PoC system through an exclusive line to operate as a PoC exclusive telephone.

The voice signal processor provides half-duplex communications through performing interconversion between voice signals used for the half-duplex communications and voice signals used for full-duplex communications in the telephone network.

The voice signal processor monitors the signal level of full-duplex voice, and, when detecting a voice-including signal, transmits the voice-including signal over the PoC system.

The voice signal processor monitors a signal level of full-duplex voice, and transmits a control signal which notifies the PoC system of an intention to obtain the right to speak upon detection of a signal of a fixed level or larger.

The voice signal processor transiently holds a voice-including signal during the execution of the process to obtain the right to speak, and sends the voice-including signal held to the PoC system after obtaining the right to speak.

The communication controller provides half-duplex communications by performing interconversion between general control signals used in the telephone network for call connection and specific control signals used in the PoC system.

When calling a PoC group which is allowed to implement broadcasting communications over the PoC system (100, 300 and 600), the communication controller preferably specifies the PoC group by using an ordinary telephone number or an SIP:URL.

The present invention exhibits at least one of following advantages.

A first advantage is to provide a commonly-used telephone with capability of communicating with a PoC system without making any modifications. This results from the fact that the right-to-speak can be obtained automatically by simply sending a voice signal (or issuing a speech) by a general telephone, which is not provided with a button switch (or PTT switch); a PoC client terminal is usually provided with a button switch to obtain the right to speak. This owes to the fact that the right-to-speak control is realized by monitoring the signal level of a full-duplex communication by using a device which handles voice signals (PoC IWF MGW).

A second advantage is to provide smooth communications by resolving the difference of the basic communication style between a half-duplex communication system and a full-duplex communication system. This owes to the fact that full-duplex communications used in a telephone network is converted to half-duplex communications by the PoC IWF MGW, which controls conversion of voice signals.

A third advantage is to provide communications free from a sense of incompatibility, such as spuriously creation of a ringing state in connecting a general telephone to the PoC system. This results from the fact that communication control signals used in telephone network and communication control signals used in the PoC system are converted by the communication controller (i.e. PoC MGCF).

### Brief Description of Drawings

FIG. 1 shows an overall network configuration for providing smooth communications through interconnection between a half-duplex communication system which is provided by a mobile phone network and allowed to perform broadcasting, and a full-duplex communication system provided by a general telephone network or a company extension telephone network;
FIG. 2 shows an example of a mechanism to specify a specific PoC group from the general telephone network by dialing;
Fig. 3 shows an example of a mechanism for specifying a PoC group for which a specific subscriber is a PoC member thereof by dialing;
Fig. 4 shows a diagram of a network configuration for providing smooth communications through interconnection between a general telephone network and the PoC system for the case where the PoC system is embodied by an IP telephone network;
Fig. 5 shows a difference between a communication procedure of a general telephone and a communication procedure of a PoC service;
Fig. 6 is an operation flowchart when a call is placed from a general telephone to the PoC group; and
Fig. 7 is a diagram of a network configuration suitable for the case where IP-dedicated telephones, softphones or other phones provided in the company extension telephone network are used as communication terminals dedicated for the PoC system.

### Best Mode for Carrying Out the Invention

In the following, a description is given of a first exemplary embodiment of the present invention with reference to attached drawings.

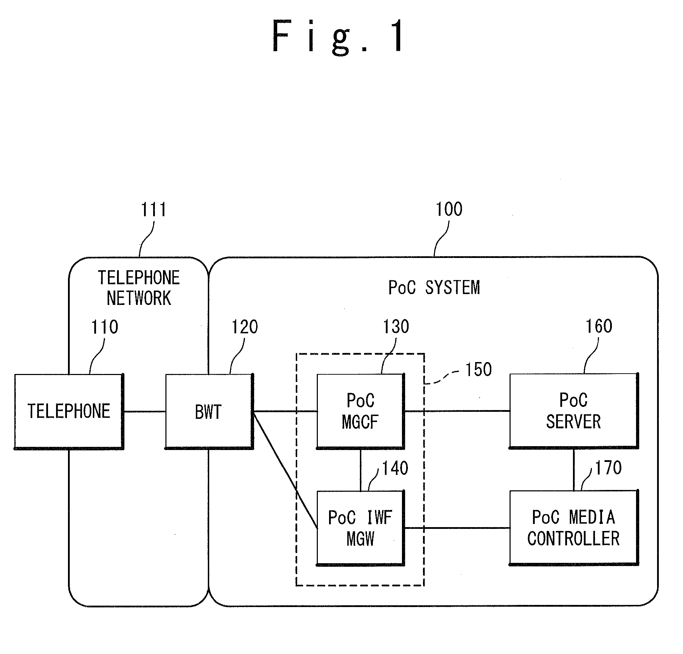

Fig. 1 shows an overall structure to provide a connection from a telephone network to a PoC (Push-To-Talk over Cellular) system.

As shown in Fig. 1, the communication system of the present invention includes a telephone 110, a BWT (two-way trunk) 120, a communication controller (PoC MGCF: Media Gateway Control Function) 130, a voice signal processor (PoC IWF MGW: Interworking Function Media Gateway) 140, a converter 150, a PoC server 160, and a PoC media controller 170.

In the first exemplary embodiment, the communication system of the present invention is provided with a PoC system 100 and a telephone network 111. The telephone network 111 includes a telephone 110. The PoC system 100 is provided with a BWT 120, a communication controller (PoC MGCF) 130, a voice signal processor (PoC IWF MGW) 140, a converter 150, a PoC server 160, and a PoC media controller 170.

The telephone 110 is a communication apparatus belonging to the telephone network 111. The BWT 120 communicates with the telephone 110 to relay communications between the telephone network 111 and the PoC system 100. It should be noted that the telephone network 111 may be an ISUP network or a BICC network. When the telephone network 111 is an IP (Internet Protocol) telephone network, the telephone network 111 is directly connected to the converter 150; the BWT 120 is not necessary. Herein, the converter 150 incorporates the communication controller (PoC MGCF) 130 and the voice signal processor (PoC IWF MGW) 140.

The communication controller (PoC MGCF) 130 provides interconversion between communication control signals used in the telephone network and communication controls signal used in the PoC system. As for main features, the telephone network performs an operation to confirm a response from a responding party by performing a ringing at the beginning of the communication, while the PoC system immediately sends a voice signal to a PoC group member without performing such operation. As thus described, the PoC MGCF plays a role of absorbing a difference between the communication operation in the general telephony and the communication operation of the PoC system.

The voice signal processor (PoC IWF MGW) 140 is a device which handles voice signals, providing interconversion between full-duplex voice signals used in the telephone network and half-duplex voice signals used in the PoC system.

The converter 150 provides a connection between a non-IP telephone network to an IP telephone network. The PoC server 160 implements control processes specific to PoC. The PoC media controller 170 is a device which controls the media; the PoC media controller 170 achieves voice announcement, which is a feature of the PoC system, for example.

Furthermore, the communication controller (PoC MGCF) 130 and the voice signal processor (PoC IWF MGW) 140 are cooperatively operated to provide smooth connections between full-duplex communications and half-duplex communications. If a speech is issued from a telephone connected to the telephone network after the start of communications, the voice signal processor 140 detects the speech from the telephone by a signal level of the voice signal. Upon this detection, a signal to control the right-to-speak is sent from the voice signal processor 140 to the communication controller 130 in order to make a control of preventing duplicated speech issuances within a PoC group. More specifically, the voice signal processor 140 sends to the communication controller 130 a control signal to notify an intention to obtain the right-to-speak. This operation allows the PoC system to internally and representatively achieve the right-to-speak obtainment, which has been conventionally performed by a PoC client.

Smooth communications between the half-duplex communication system and the full-duplex communication system can be provided by cooperatively operating the aforementioned two controllers for the voice control, communication control signal control and right-to-speak management.

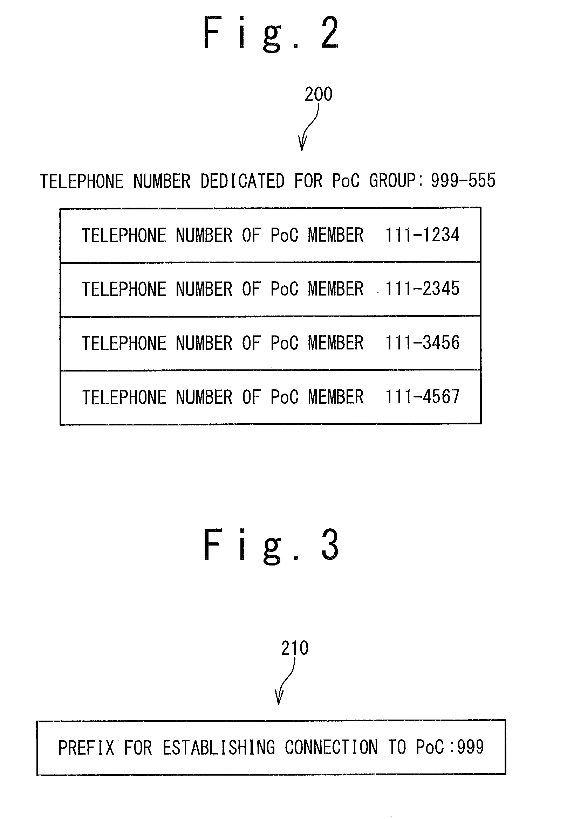

In addition, cooperative operations of a general telephone network and a PoC system requires joining as a member of a PoC group by specifying the PoC group from a general telephone. The following two methods shown in FIGs. 2 and 3 may be used to specify a PoC group from the general telephone. As shown in FIG. 2, one method is a method denoted by the numeral 200, which involves assigning telephone numbers dedicated for PoC groups. As for an IP telephone network, SIP-URLs (Session Initiation Protocol-Uniform Resource Locator) may be used in place of telephone numbers. Dialing a telephone number dedicatedly assigned to a PoC group allows joining as a member of the specified PoC group. Another method is a method denoted by the numeral 210 shown in FIG. 3 which involves specifying a PoC group by adding a prefix to telephone numbers of members who constitute the PoC group. The method 210 shown in FIG. 3 has a merit that it is unnecessary to remember telephone numbers dedicatedly assigned to a plurality of PoC groups, since starting PoC communications from the general telephone only requires by simply remembering a fixed prefix.

A description is given of a second exemplary embodiment in the following.

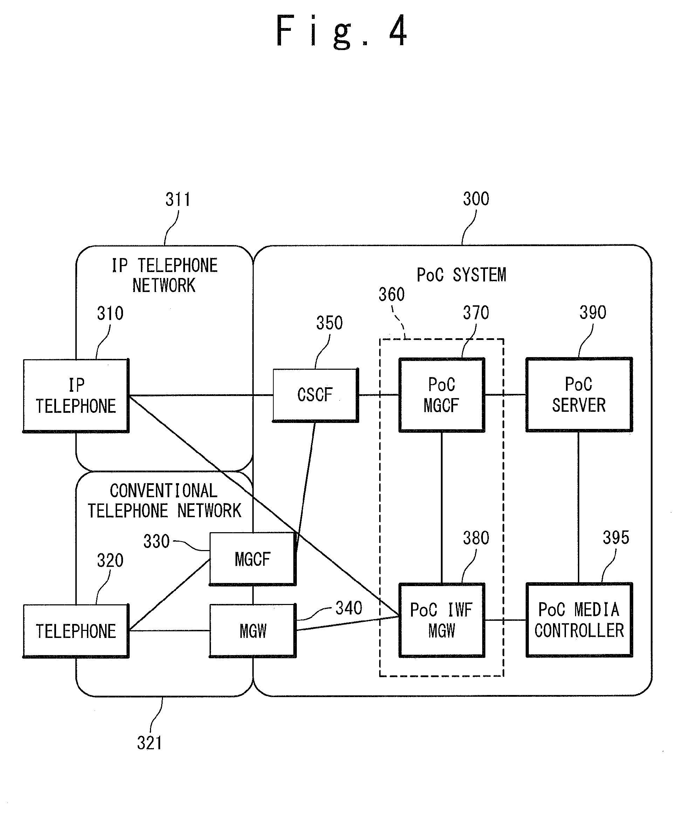

Referring to FIG. 4, the communication system of the second exemplary embodiment of the present invention includes a PoC system 300 and telephone networks accessible to the PoC system 300. Described here is a case where the telephone networks include an IP telephone network 311 and a conventional public telephone network 321. Although this exemplary embodiment is realized by two devices (370 and 380) referred to as a converter 360, other devices shown in the PoC system 300 are basic devices to provide a PoC service.

FIG. 4 is a configuration diagram of the PoC system based on an IP telephone network.

The communication system of this exemplary embodiment includes an IP telephone 310, a telephone 320, an MGCF (Media Gateway Control Function) 330, a MGW (Media Gateway) 340, a CSCF (Call State Control Function) 350, a converter 360, a communication controller (PoC MGCF) 370, a voice signal processor (PoC IWF MGW) 380, a PoC server 390, and a PoC media controller 395.

The IP telephone 310 is a communication apparatus belonging to the IP telephone network 311; the IP telephone 310 establishes a communication path with an intended party on the basis of IP protocols used in the Internet. For example, a telephone dedicated to IP telephony or a personal computer is often used as the IP telephone 310. The telephone 320 is a normal telephone belonging to a conventional public telephone network 321. The MGCF 330 and the MGW 340 are devices which provide communications between the PoC system based on the IP telephone network and the conventional telephone network. The MGCF 330 is a device which provides conversion between call process control signals of the ISUP, BICC and the like used in the conventional telephone network and signals used in the IP telephone. The MGW 340 is a device which converts codec types of voice signals (e.g. such as PCM and AMR). The CSCF 350 is a server which realizes the IP telephony. The converter 360 incorporates the communication controller (PoC MGCF) 370 and the voice signal processor (PoC IWF MGW) 380. The communication controller (PoC MGCF) 370 provides interconversion between communication control signals used in the telephone network and communication control signals used in the PoC system. The voice signal processor (PoC IWF MGW) 380 is a device which handles voice signals, providing interconversion between full-duplex voice signals used in the telephone network and half-duplex voice signals used in the PoC system. The PoC server 390 implements control processes specific to PoC. The PoC media controller 395 is also a device which controls the media; the PoC media controller 395 achieves voice announcement, which is a feature of the PoC system, for example.

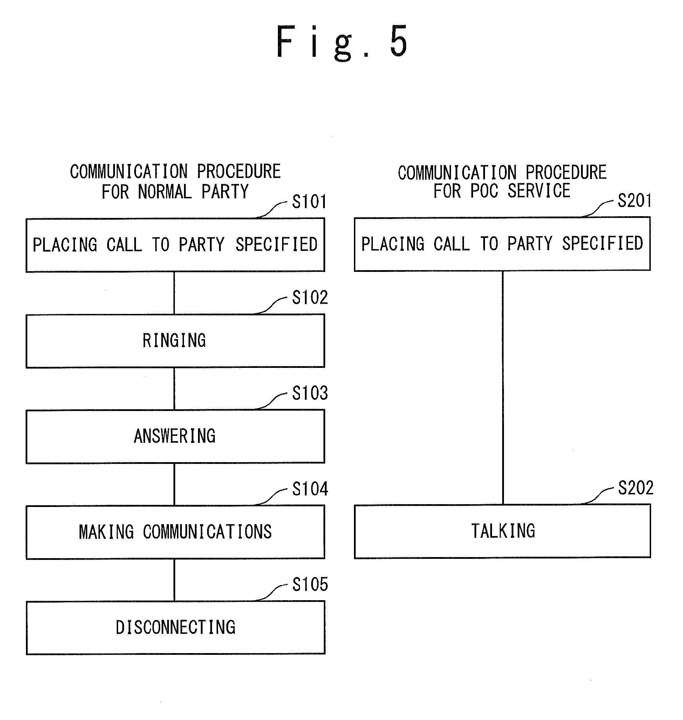

A description is given of an operation in the case where voice is transmitted from a generally used telephone to the PoC system. FIG. 5 shows a comparison between a communication procedure used in the general telephone network and a communication procedure in the PoC service. In the general telephone network, a call is placed to a party specified (step S101), followed by ringing (step S102), answering (step S103), making communications (step S104), and thereafter disconnecting the communications (step S105). In the PoC service, a call is placed to a party specified (step S201), followed by making communications (step S202).

In short, the difference exists in the fact that the PoC service does not involves ringing (step S102), answering (step S103) and disconnecting (step S105), which are processes performed in the general telephone network. It is the communication controller (PoC MGCF) 370 that absorbs this difference to provide a smooth call connection. The communication controller (PoC MGCF) 370 provides the communication procedure of the general telephone for the CSCF 350 and provides the communication procedure of the PoC service for the PoC server 390.

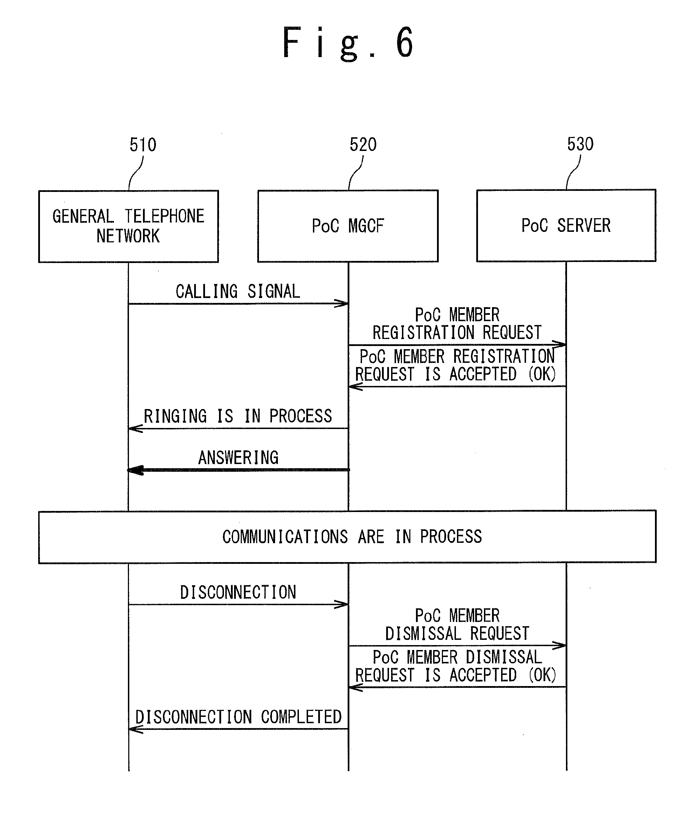

A description is further given of a detailed operation of the PoC MCCF with reference to FIG. 6.

### (1) Step S301

A calling signal is sent from a general telephone network 510 (or caller) to a communication controller (PoC MGCF) 520.

### (2) Step S302

The communication controller (PoC MGCF) 520 makes an inquiry to a PoC server 530 about whether or not the caller which is sending the calling signal from the general telephone network 510 is registered as a PoC member. If the caller is not registered, the communication controller (PoC MGCF) 520 sends a signal to request registration of ID information (such as the ordinary telephone number or the SIP:URL) of the caller to the PoC server 530.

### (3) Step S303

The PoC server 530 notifies the communication controller (PoC MGCF) 520 that the request for the PoC member registration has been accepted (i.e. OK).

### (4) Step S304

A signal to notify that the ringing is in process is sent from the communication controller (PoC MGCF) 520 to the general telephone network 510.

### (5) Step S305

A signal to notify answering is sent from the communication controller (PoC MGCF) 520 to the general telephone network 510 to thereby notify the caller that the caller is placed in the communicable state.

### (6) Step S306

The caller is allowed to communicate via the general telephone network 510.

### (7) Step S307

The communications are terminated in response to a disconnection signal received from the general telephone network 510.

### (8) Step S308

The communication controller (PoC MGCF) 520, which has received the disconnection signal from the caller, sends to the PoC server 530 a signal to request a PoC member dismissal to dismiss the caller from the PoC members.

### (9) Step S309

The PoC server 530 notifies the communication controller (PoC MGCF) 520 that the PoC member dismissal request has been accepted (i.e. OK).

### (10) Step S310

The PoC server 530 notifies the general telephone network 510 (or the caller) that disconnection has been completed.

More precisely, when the communication controller (PoC MGCF) 520 receives a calling signal from the general telephone network 510 as shown in FIG. 6, the communication controller (PoC MGCF) 520 specifies a targeted PoC group by using the dialed telephone number, the SIP-URL or the like. It is further determined whether or not the caller is registered as a PoC member in the specified PoC group. When the caller is not registered, the communication controller (PoC MGCF) 520 executes a process to register ID information (such as the ordinary telephone number and the SIP:URL) of the caller in the PoC server 530. After this process is completed, a signal to notify that the ringing is in process and a signal to further notify answering are sent to the caller to notify the caller that the caller is placed in the communicable state. At this moment, it is possible to realize further smooth communications by providing a dial tone or announcement for prompting the caller to speak. The operations during communications shown in FIG. 6 will be described later. On the other hand, the termination of the communications is surely performed in response to the disconnection signal sent from the general telephone network 510. This is because the PoC system, which is premised on an environment in which half-duplex signals are always allowed to be exchanged, lacks a specific procedure to achieve disconnection. The communication controller (PoC MGCF) 520, which has received the disconnection signal from the caller, sends to the PoC server 530 a signal requesting the PoC member dismissal to dismiss the caller from the PoC member. This operation allows completely dismissing the caller from the PoC group.

The operations during the communications shown in FIG. 6 provide smooth communications between full-duplex communications and half-duplex communications. This operation is mainly carried out by the voice signal processor (PoC IWF MGW) 380 shown in FIG. 4.

A description is first given of an operation in the case where voice is coming from a telephone connected to the general telephone network.

The voice signal processor (PoC IWF MGW) 380 of FIG. 4 continuously monitors the signal levels from telephones. When a signal exceeding a certain threshold value is detected, the voice signal processor (PoC IWF MGW) 380 determines that the user of the relevant telephone has an intension to initiate communications and starts an operation on behalf of the telephone to obtain the right-to-speak, which is one feature of the PoC system. The right-to-speak obtainment is achieved by a declaration to the PoC server 390 of FIG. 4 from the voice signal processor (PoC IWF MGW) 380 via the communication controller (PoC MGCF) 370 of FIG. 4. During this process, the voice signal processor (PoC IWF MGW) 380 provides buffering for a received voice signal to prepare for transmission after the right to speak obtainment. After obtaining the right to speak, buffered voice data are transmitted to the PoC media controller 395 of FIG. 4. This operation allows broadcasting from the telephone connected to the general telephone network to PoC members. It should be noted that the voice signal processor (PoC IWF MGW) 380 abandons the right to speak on behalf of the telephone, when the voice signal level is kept below a certain threshold value for a fixed period or when a single speech exceeds maximum time allocated thereto.

In the following, a description is given of a third exemplary embodiment of the present invention with reference to the attached drawings.

Described here is an operation in the case where voice data transmitted from other PoC members are broadcasted from a PoC media controller and received by a PoC IWF MGW. In this case, the operation is realized by transmitting voice data received by the PoC IWF MGW to a telephone connected to the general telephone network without making any changes.

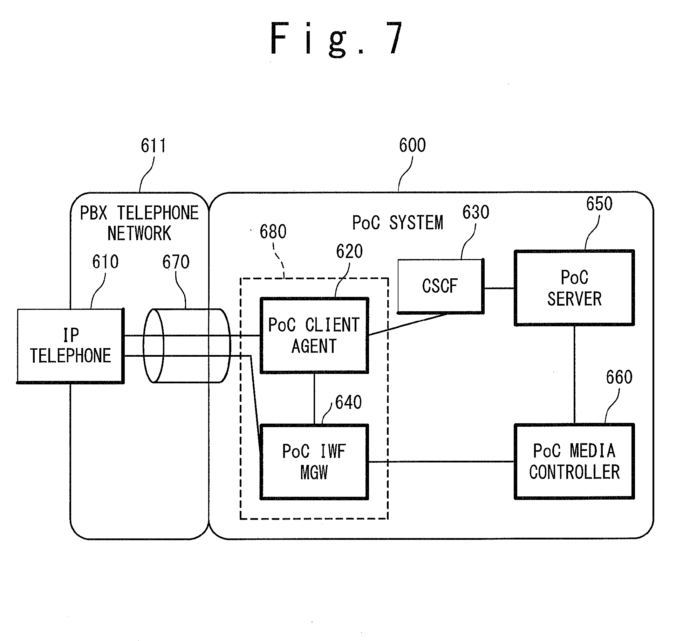

FIG. 7 shows a network configuration applicable to a case where IP-dedicated telephones and softphones provided for a company extension telephone network or other networks are used as communication terminals dedicated for the PoC system.

As shown in FIG. 7, the communication system of this exemplary embodiment is provided with a PoC system 600 and a PBX (Private Branch Exchange) telephone network 611. The communication system of the present exemplary embodiment is also provided with an IP telephone 610, a PoC client agent 620, a CSCF 630, a voice signal processor (PoC IWF MGW) 640, a PoC server 650 and a PoC media controller 660.

In this case, the PBX telephone network 611 incorporates the IP telephone 610. On the other hand, the PoC system 600 incorporates the PoC client agent 620, the CSCF 630, the voice signal processor (PoC IWF MGW) 640, the PoC server 650 and the PoC media controller 660.

The PoC system 600 and the PBX telephone network 611 are connected through an IP tunnel 670. A converter 680 incorporates the PoC client agent 620 and the voice signal processor (PoC IWF MGW) 640 within the PoC system 600.

The IP telephone 610 belongs to the PBX telephone network 611. The PoC client agent 620 performs a process required to treat the converter 680 itself as a PoC group member. The CSCF 630 is a server to realize IP telephony. The voice signal processor (PoC IWF MGW) 640 is a device which handles voice signals, providing interconversion between full-duplex voice signals used in the telephone network and half-duplex voice signals used in the PoC system. The PoC server 650 performs control processes specific to PoC. The PoC media controller 660 is a device which controls the media; the PoC media controller 660 achieves voice announcement, which is one feature of the PoC system, for example.

The PoC system and the IP telephone are connected by the secure IP tunnel 670, which assures continuous connectivity to the PoC system, in order to allow the IP telephone 610 to be a PoC member for the PoC system. Since the converter 680 operates as a normal PoC member in the PoC system 600, the converter 680 itself can be treated as a normal PoC member. Accordingly, although the configuration of FIG. 6 involves associating the PoC member registration and dismissal with a calling signal and a disconnection signal sent from the general telephone network, the configuration of FIG. 7 allows the IP telephone to be continuously treated as a PoC member, eliminating the needs for such association; this raises expectations for the improvement of immediacy owing to simplification of the call control.

The system configuration of FIG. 6, which provides connection operation between the general telephone network and the PoC system, is suitable for services in the public telephone network. For a case where a PoC group is established in the PoC system provided in a mobile phone service, for example, the system configuration of FIG. 6 is suitable for a service such as ringing and communications from a general subscriber telephone to the group.

The system configuration of FIG. 7, in which IP-dedicated telephones and softphones provided in a company extension telephone network or other networks are used as communication terminals dedicated for the PoC system, is suitable for a case where a vehicle dispatch instruction is sent to a PoC group of taxi drivers by a person in charge of vehicle dispatch in a taxi company using an IP telephone as shown by the numeral 610 of FIG. 7; this is one specific exemplary implementation.

It should be noted that a device including a microphone, a speaker and a transmission/reception switching switch (referred to as a DDC (Desktop Dispatch Console), hereinafter) may be connected to a personal computer, so that the DDC is operated as a telephone or a terminal dedicated for the PoC system, by the software of the PC, in the above exemplary embodiments. In this case, the DDC operates as a PoC-dedicated device which carries out half-duplex communications by being connected to the PoC system through an exclusive line.

As explained above, the communication system of the present invention provides half-duplex communications by interconnecting a half-duplex communication system (referred to as a PoC system hereinafter) adapted to broadcasting and provided within a cell phone network, a telephone station connected to a full-duplex communication system such as general telephone networks and company extension telephone networks, and a terminal device dedicated to the PoC system.

## Claims

1. A communication system comprising:
a communication controller that performs interconversion between a communication control signal used in a telephone network and a communication control signal used on a PoC (Push-To-Talk over Cellular) system; and
a voice signal processor that performs interconversion between a full-duplex voice signal used in said telephone network and a half-duplex voice signal used in said PoC system.

2. The communication system according to claim 1, wherein, when starting communications, said communication controller performs ringing in said telephone network to seek a response from a responding side, while immediately transmitting a voice signal to a PoC group member in said PoC system.

3. The communication system according to claim 1, wherein said communication controller and said voice signal processor are cooperatively operated to provide a connection between full-duplex communications and half-duplex communications.

4. The communication system according to claim 1, wherein, when a speech is issued from a telephone connected to said telephone network after a start of communications, said voice signal processor makes a control for preventing duplicate speech issuances within the PoC group by detecting the speech from said telephone by using a signal level of the voice signal received from said telephone, and sending a signal for controlling a right-to-speak to said communication controller from said voice signal processor upon the detection of said speech.

5. The communication system according to claim 1, wherein said telephone belongs to a full-duplex communication network, and is connected to the PoC system through an exclusive line to operate as a PoC exclusive telephone.

6. The communication system according to claim 1, wherein said voice signal processor provides half-duplex communications through implementing interconversion between voice signals used for half-duplex communications and voice signals used for full-duplex communications in said telephone network.

7. The communication system according to claim 1, wherein said voice signal processor monitors a signal level of full-duplex voice, and transmits the voice-including signal over the PoC system when detecting a voice-including signal.

8. The communication system according to claim 1, wherein said voice signal processor monitors a signal level of full-duplex voice, and transmits a control signal which notifies said PoC system of an intention to obtain a right to speak upon detection of a signal of a fixed level or larger.

9. The communication system according to claim 8, wherein said voice signal processor transiently holds a voice-including signal during execution of a process to obtain said right to speak, and sends the voice-including signal held to said PoC system after completing the process to obtain said right to speak.

10. The communication system according to claim 1, wherein said communication controller provides half-duplex communications by performing interconversion between a general control signal used in said telephone network for call connection and specific control signals used in said PoC system.

11. The communication system according to claim 1, wherein, when calling a PoC group which is allowed to implement broadcasting communications over said PoC system, said communication controller specifies said PoC group by using an ordinary telephone number or an SIP:URL.

12. A communication apparatus comprising:
means for performing interconversion between a communication control signal used in a telephone network and a communication control signal used in a PoC (Push-To-Talk over Cellular) system.

13. The communication apparatus according to claim 12, wherein said means performs ringing in said telephone network to seek a response from a responding side, while immediately transmitting a voice signal to a PoC group member in said PoC system.

14. A voice signal processor comprising:
means for performing interconversion between a full-duplex voice signal used in a telephone network and a half-duplex voice signal used in a PoC system.

15. The voice signal processor according to claim 14, further comprising:
means for detecting a speech from said telephone from a signal level of a voice signal received from said telephone, when the speech is issued from the telephone connected to said telephone network; and
means for transmitting a signal for controlling a right-to-speak to a communication controller upon detection of said speech.

16. The voice signal processor according to claim 14, further comprising:
means for monitoring a signal level of full-duplex voice, and transmitting a control signal which notifies said PoC system of an intention to obtain a right to speak upon detection of a signal of a fixed level or larger.

17. A communicating method comprising:
a step of performing interconversion between a communication control signal used in a telephone network and a communication control signal used in a PoC (Push-To-Talk over Cellular) system; and
a step of performing interconversion between a full-duplex voice signal used in said telephone network and a communication control signal used in said PoC system.

18. The communication method according to claim 17, further comprising:
a step of performing ringing in said telephone network to seek a response from a responding side, while immediately transmitting a voice signal to a PoC group member in said PoC system.

19. An operation method for communication apparatuses, comprising:
a step of performing interconversion between a communication control signal used in a telephone network and a communication control signal used in a PoC (Push-To-Talk over Cellular) system.

20. The operation method for communication apparatuses according to claim 19, wherein said step of performing interconversion includes:
a step of performing ringing in said telephone network to seek a response from a responding side, while immediately transmitting a voice signal to a PoC group member in said PoC system.

21. An operation method for voice signal processors, comprising:
a step of performing interconversion between a full-duplex voice signal used in said telephone network and a communication control signal used in said PoC system.

22. The operation method for voice signal processors according to claim 21, further comprising:
a step of detecting a speech from said telephone from a signal level of a voice signal received from said telephone, when the speech is issued from the telephone connected to said telephone network; and
a step of transmitting a signal for controlling a right-to-speak to a communication controller upon detection of said speech.
